## Europäisches Patentamt
## European Patent Office
## Office européen des brevets

(19)

(11) Veröffentlichungsnummer: **0 235 310**
**B1**

(12) # EUROPÄISCHE PATENTSCHRIFT

(45) Veröffentlichungstag der Patentschrift:
13.12.89

(51) Int. Cl.⁴: **B23K 35/30**, C22C 38/56

(21) Anmeldenummer: 86101435.5

(22) Anmeldetag: 04.02.86

(54) **Legierung zum Aufschweissen.**

(43) Veröffentlichungstag der Anmeldung:
09.09.87 Patentblatt 87/37

(45) Bekanntmachung des Hinweises auf die Patenterteilung:
13.12.89 Patentblatt 89/50

(84) Benannte Vertragsstaaten:
CH DE FR GB LI SE

(56) Entgegenhaltungen:
FR-A- 872 635
GB-A- 1 100 200
US-A- 3 060 017

AUTOMATIC WELDING, Band 30, Nr. 7, Juli 1977,
Seiten 42-44, Cambridge, GB; V.S. POPOV et al.: "A
wear-resistant alloy and a technology for hardfaced
press roll bands"

(73) Patentinhaber: INSTITUT PO METALOKERAMIKA,
Dzerjinski-Strasse 122, Sofia(BG)

(72) Erfinder: Stojnov, Emil Pentschev, Komplex Lenin
Block 29-2, Sofia(BG)
Erfinder: Jelev, Jeljo Georgiev, Jantra-Strasse 17,
Sofia(BG)
Erfinder: Vitschev, Vesselin Vassilev, Komplex Tolstoj
Block 5-2, Sofia(BG)

(74) Vertreter: von Füner, Alexander, Dr. et al, Patentanwälte
v. Füner, Ebbinghaus, Finck
Mariahilfplatz 2 & 3 Postfach 95 01 60,
D-8000 München 95(DE)

## Beschreibung

Die Erfindung betrifft eine Legierung zum Aufschweißen, die zum Arbeiten unter den Bedingungen einer starken Abrasionsabnutzung ohne Schlagbelastung bestimmt ist.

Es ist eine Legierung zum Aufschweißen auf Eisenbasis bekannt, die 2,3 bis 3,8 % Kohlenstoff, 28 % Chrom, 1,3 % Mangan, 2,5 bis 4,0 % Silicium, 0,2 bis 0,5 % Bor, 1,3 bis 3,0 % Nickel und Rest Eisen enthält (Katalog "Aufschweißmaterialien der RGW-Länder", 1979).

Die bekannte Legierung besitzt folgende Nachteile: Die Legierung hat keine genügend hohe Härte und Abnutzungsfestigkeit;
die Anwesenheit von Mangan in der Legierung erhöht die Menge der Schlacke während des Aufschweißens, wobei die Qualität der Aufschweiß-Schicht verschlechtert wird.

Der Erfindung liegt die Aufgabe zugrunde, eine Legierung zum Aufschweißen zu schaffen, die eine hohe Härte und Abnutzungsfestigkeit besitzt, wobei während des Aufschweißens die Schlackenbildung verringert wird.

Diese Aufgabe wird durch eine Legierung zum Aufschweißen gelöst, die folgende Zusammensetzung aufweist:
1,5 bis 2,5 % Kohlenstoff,
20 bis 24 % Chrom,
2 bis 4 % Silicium.
2 bis 4 % Bor,
4 bis 6 % Nickel und
59,5 bis 70,5 % Eisen,
wobei die Summe aller Komponenten 100% ergibt.

Das Aufschweißen von Werkstücken mit der erfindungsgemäßen Legierung wird nach dem Verfahren des Plasma-, Gasflammen- oder Induktionsaufschweißens durchgeführt.

Die erfindungsgemäße Legierung besitzt folgende Vorteile:
Das Verhältnis zwischen den Komponenten gewährleistet die Bildung von Chrom- und Eisencarbiden und -carboboriden; eine gleichmäßige Verteilung der Komponenten in der Legierungsmatrize, was eine höhere Härte und Abnutzungsfestigkeit im Vergleich zu der bekannten Legierung bedingt; die Menge der Schlacke während des Aufschweißens ist kleiner.

Die Erfindung wird anhand des folgenden Beispiels besser erläutert:
Es wird eine pulverförmige Legierung durch Pulverisieren einer Metallschmelze mit Wasser erzeugt, welche folgende Zusammensetzung aufweist:
2,06 % Kohlenstoff,
23,85 % Chrom,
3,62 % Silicium,
4 % Bor
4,70 % Nickel und
61,77 % Eisen.

Mit dieser Legierung werden Schichten nach dem Verfahren des Plasma-Aufschweißens aufgeschweißt. Die aufgeschweißten Schichten haben eine Härte HRC 64 - 82. Die Prüfung der Abnutzungsfestigkeit wurde mit dem Gerät "Taber Abraser", Modell 503 und Abrasionsscheiben H-10 bei einer Belastung von 1 kg bei jeder Scheibe durchgeführt. Der abgelesene Gewichtsverlust nach 100, 200, 300 und 400 Zyklen beträgt 0,0226 g, 0,0207 g, 0,0135 g und 0,0127 g. Der Koeffizient der relativen Abnutzungsfestigkeit gegenüber einem Prüfling aus Stahl 45 (nicht abgehärtet) ist wie folgt: E = 2,75 für 100 Zyklen, E = 2,55 für 200 Zyklen, E = 3,84 für 300 Zyklen und E = 3,98 für 400 Zyklen.

## Patentansprüche

Legierung zum Aufschweißen auf Eisenbasis, die Kohlenstoff, Chrom, Silizium, Bor und Nickel enthält, dadurch gekennzeichnet, daß die Komponenten im folgenden Gewichtsverhältnis vorhanden sind:
1,5 bis 2,5% Kohlenstoff,
20 bis 24% Chrom,
2 bis 4% Silicium,
2 bis 4% Bor,
4 bis 6% Nickel und
59,5 bis 70,5% Eisen,
wobei die Summe aller Komponenten 100% ergibt.

## Claims

Overlay alloy based on iron, which contains carbon, chromium, silicon, boron and nickel, characterised in that the components are present in the following weight ratio:
1.5 to 2.5% carbon
20 to 24% chromium
2 to 4% silicon
2 to 4% boron
4 to 6% nickel and
59.5 to 70.5% iron,
with the sum of all the components amounting to 100%.

## Revendications

Alliage pour soudage sur une base en fer, qui comprend du carbone, du chrome, du silicium, du bore et du nickel, caractérisé en ce que les composants sont présents dans les proportions pondérales suivantes:
1,5 à 2,5% de carbone,
20 à 24% de chrome,
2 à 4% de silicium,
2 à 4% de bore,
4 à 6% de nickel, et
59,5 à 70,5% de fer,
la somme de tous les composants étant de 100%.